# EUROPÄISCHE PATENTSCHRIFT

(11) **EP 1 354 419 B1**
(45) Veröffentlichungstag und Bekanntmachung des Hinweises auf die Patenterteilung: **03.12.2008**
(21) Anmeldenummer: 02708170.2
(22) Anmeldetag: 26.01.2002
(51) Int. Cl.: H04B 1/38

(54) **FREISPRECHEINRICHTUNG FÜR DEN BETRIEB VON MOBILTELEFONEN IN KRAFT FAHRZEUGEN**
HANDS-FREE DEVICE FOR OPERATING MOBILE TELEPHONES IN MOTOR VEHICLES
DISPOSITIF MAINS LIBRES DESTINE AU FONCTIONNEMENT DE TELEPHONES MOBILES DANS DES VEHICULES AUTOMOBILES

(30) Priorität: 28.01.2001 DE 10103608
(43) Veröffentlichungstag der Anmeldung: 22.10.2003
(73) Patentinhaber: Audioton Kabelwerk GmbH Zweigniederlassung Scheinfeld, 91443 Scheinfeld (DE)
(72) Erfinder: SCHUFFERT, Guido, 91325 Adelsdorf (DE)
(74) Vertreter: Lelgemann, Karl-Heinz
(86) Internationale Anmeldenummer: PCT/DE2002/000270
(87) Internationale Veröffentlichungsnummer: WO 2002/060078

(56) Entgegenhaltungen:
- EP-A- 0 265 306
- WO-A-98/59425
- DE-U- 29 900 803
- US-A- 6 029 072

## Beschreibung

Die Erfindung betrifft eine Freisprecheinrichtung für den Betrieb von Mobiltelefonen in Kraftfahrzeugen.

Eine derartige Freisprecheinrichtung ist aus der ADAC-Zeitschrift GUTE FAHRT Heft 6/1998 als universell, nämlich als für die meisten handelsüblichen Mobiltelefone (die auch sogenannten Handys) verwendbares Einbausystem mit optionalem Anschluß an das Autoradio zur Stummschaltung und Verwendung dessen Lautsprechers bekannt. Die vielseitige Verwendbarkeit dieses Systems beruht bei dieser bekannten Freisprecheinrichtung auf einer funktionalen Zweiteilung dahingehend, daß für die fahrzeugseitigen Anpassungen einschließlich der Steuerung der Freisprechkomponenten ein fahrzeugfest zu installierender Schnittstellenmodul mit Mikroprozessor vorgesehen ist, während alle gerätespezifischen Anforderungen (Ablaufprogramm und Daten) in einen Speicher im gerätespezifischen Stecker eines hier sogenannten Systemkabels ausgelagert sind, welches das Schnittstellenmodul mit einer gerätespezifisch schalenförmigen in der Praxis Cradle genannten Halterung für das Mobiltelefon verbindet. Die Kommunikation zwischen diesen beiden Systemteilen besorgt der im Schnittstellenmodul enthaltener Mikroprozessor über zwei serielle Schnittstellen.

Der Nutzer braucht bei dieser bekannten Freisprecheinrichtung also lediglich zu seinem aktuell benutzten Mobiltelefon über eine dazu mechanisch passende Halterung samt elektrisch passendem Systemkabel zu verfügen, um diese im Fahrzeug installierte Freisprecheinrichtung nutzen zu können. Deshalb kann das zu benutzende Fahrzeug freizügig gewechselt bzw. ein Fahrzeug von verschiedenen Nutzern mit ihren unterschiedlichen Mobiltelefonen gefahren werden, ohne gegen die aktuellen Verbote des händischen Telefonierens im betriebsbereiten Kraftfahrzeug verstoßen zu müssen. Die gerätespezifische Halterung (Cradle) für die schocksichere Aufnahme des zugeordneten Mobiltelefones ist manuell leicht austauschbar auf einer fahrzeugfest montierten Montageeinheit verrastbar. Mit dem Anstecken des Systemkabels bzw. mit dem Starten des Motors bei angestecktem Kabel wird die Programmierung des Schnittstellenmodules initiiert, also der gerätespezifische Betriebsdatensatz aus dem Systemkabel-Stecker in den Mikroprozessor geladen und dessen Programm dadurch gerätespezifisch abgearbeitet.

Diese den Duplex-Freisprechbetrieb ermöglichende Einrichtung hat sich in der Praxis bewährt.

Die EP-A-0 265 306 zeigt eine Steueranlage für unterschiedliche Funktionen eines Kraftfahrzeugs, die hierfür mit einer Sprachsteuerung versehen ist. Ein Mobiltelefon oder gar eine Freisprechanlage für ein Mobiltelefon wird nicht beschrieben.

Aus der US-A-6 029 072 ist ein Verfahren bekannt, mittels dem ein Mobiltelefon an einen Host-Rechner integriert werden kann, mittels dem unterschiedliche Funktionen eines Kraftfahrzeugs gesteuert werden und der eine große Anzahl von betrieblichen Vorgängen des Kraftfahrzeugs erfasst. Mittels der Integration soll die Möglichkeit gegeben werden, dass das Mobiltelefon als Ein- und Ausgabeeinheit für den Host-Rechner nutzbar ist. Der Host-Rechner kann mit einer Spracherkennung versehen sein.

Die DE 299 00 803 U betrifft die Ausrüstung eines Kraftfahrzeugs mit einem Funktelefon-Empfänger, wobei mittels des Empfängers bestimmte Aggregate des Kraftfahrzeugs, beispielsweise Heizung, heizbare Scheiben, heizbare Spiegel od.dgl. in Betrieb gesetzt werden können.

Aus der WO 98/59425 A ist eine als Freisprecheinrichtung ausbildbare Kraftfahrzeug-Einbauvorrichtung für Mobiltelefone bekannt, die eine Zentralsteuereinheit bzw. Montageeinheit hat, die im Kraftfahrzeug installiert werden kann. Des Weiteren ist eine Halterung vorgesehen, in der ein Mobiltelefon temporär aufnehmbar ist. Die Halterung ist gerätspezifisch hinsichtlich des Mobiltelefons ausgebildet. Außerdem hat die bekannte Kraftfahrzeug-Einbauvorrichtung eine Anpassungssteuereinheit bzw. ein Schnittstellenmodul, welches fahrzeugspezifische Daten enthält.

Ausgehend von dem vorstehend geschilderten Stand der Technik liegt der Erfindung die Aufgabe zugrunde, eine Freisprecheinrichtung derart weiterzubilden, dass sie benutzerfreundlicher ist und dass ihre Anwendungsbreite vergrößert ist.

Diese Aufgabe wird erfindungsgemäß dadurch gelöst, dass das Schnittstellenmodul mit einem Sprachkenner zur verbalen Steuerung der Freisprecheinrichtung und anderer Funktionen im Kraftfahrzeug ausgestattet ist und dass mehrere, jeweils einen Mikroprozessor aufweisende Halterungen und/oder Montageeinheiten vorgesehen sind, die an einem Bus zu dem gemeinsamen Schnittstellenmodul anschließbar sind.

Erfindungsgemäß wird die Handhabung der Freisprecheinrichtung durch den Sprachkenner einerseits erleichtert, wobei andererseits durch den möglichen Anschluss mehrerer Halterungen und/oder Montageeinheiten am ihnen gemeinsamen Schnittstellenmodul mit ein und derselben Freisprecheinrichtung mehrere Mobiltelefone ggf. unterschiedlicher Bauart betrieben werden können.

Vorteilhaft wird die Halterung und/oder die Montageeinheit an einem im Kraftfahrzeug ohnehin vorhandenen Steuergerät angeschlossen. Es kann sich um ein Steuergerät eines Autoradios, eines Fernsehers, eines Navigationssystems, des Internets oder eines Kommunikationssystems, wie Telematic, handeln.

Alternativ oder zusätzlich kann vorgesehen sein, dass die Halterung und/oder die Montageeinheit an einem im Kraftfahrzeug installiertem Schnittstellenmodul, das vorzugsweise auf einen Mikroprozessor gespeicherte fahrzeugspezifische Daten aufweist, anschließbar ist, und an der Halterung und/oder der Montageeinheit und/oder an dem Schnittstellenmodul ein kabelloses Fernsteuergerät anschließbar ist. Über das Fernsteuergerät können auch derartige andere Funktionen als die Freisprecheinrichtung im Kraftfahrzeug ferngesteuert werden, wie sie etwa über ein Multifunktionslenkrad ansteuerbar wären. Es ergibt sich bei apparativer Vereinfachung auch gleichzeitig eine Erhöhung des Benutzerkomforts.

Bei bevorzugten Weiterbildungen kommunizieren die Mikroprozessoren, d.h. der Mikroprozessor der Montageeinheit bzw. der Halterung bzw. im Falle, daß mehrere Montageeinheiten oder Halterungen jeweils mit Mikroprozessor vorgesehen sind, die Mikroprozessoren mit dem Mikroprozessor des Schnittstellenmoduls über einen Bus. Hierbei kann eine automatisch optimierende Schnittstellenkonfiguration, eine Berechtigungsprüfung und/oder eine Datenverschlüsselung und/oder Datenkompression realisiert sein. Besonders vorteilhaft ist es, eine automatische Schnittstellenkonfiguration mit einer Berechtigungsprüfung und mit einer Datenverschlüsselung zu verknüpfen. Durch entsprechende Kombinationen sind Ausführungen von Freisprecheinrichtungen realisierbar, die vielseitig einsetzbar, aber dennoch manipulationssicher und selbst für Mobiltelefone der künftigen UMTS-Generation problemlos verwendbar sind.

Durch die materiell oder kabellos immaterielle Busverbindung zwischen Schnittstellenmodul und Montageeinheit für die Halterung ist es besonders vorteilhaft möglich, mehrere auch für gänzlich unterschiedliche Leistungsklassen ausgelegte Halterungen an ein einziges Schnittstellenmodul im Fahrzeug anzuschließen. Dies ist vor allem für Geschäftsfahrzeuge von gesteigertem praktischen Interesse.

Um für Telefonate im Privatmodus nicht das Mobiltelefon aus seiner Halterung herausnehmen zu müssen, kann deren fahrzeugfeste Montageeinheit mit einem kleinen Sender-Empfänger für drahtlose Kommunikation etwa über Kopfhörer und Mikrofon eines Headset ausgestattet oder nachgerüstet werden.

Der Einsatz ist in allen Kraftfahrzeugen, d.h. Personen- und Nutzfahrzeugen aller Art vorgesehen. Auch der Einsatz in Schienenfahrzeugen ist vorgesehen. Es handelt sich in der Regel um Einsatz in Landfahrzeugen, aber auch der Einsatz z.B. in Sportbooten und Sportfahrzeugen ist entsprechend möglich.

Bezüglich Einzelheiten der erfindungsgemäßen Lösungen und deren Weiterbildungen wird außer auf die Ansprüche, die alle inhaltlich auch in wechselseitiger Abhängigkeit voneinander stehen können, auch auf nachstehende Beschreibung verwiesen, die anhand eines in der Zeichnung auf das Wesentliche vereinfacht skizzierten bevorzugten Realisierungsbeispieles zur Erfindung auf deren Grundfunktionen und Weiterbildungsmöglichkeiten näher eingeht.

Dabei zeigt:

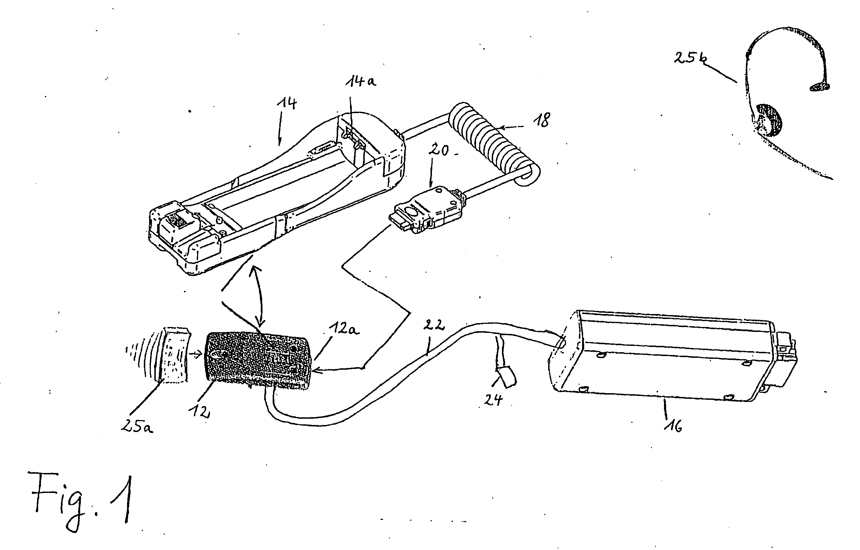

- Fig. 1: eine Explosionsdarstellung eines Ausführungsbeispiels einer Freisprecheinrichtung.

Bei dem dargestellten Ausführungsbeispiel handelt es sich um eine hinsichtlich unterschiedlichster Typen und Leistungsklassen von marktgängigen Mobiltelefonen universell verwendbare Kraftfahrzeug-Freisprecheinrichtung, kurz Universal-Freisprecheinrichtung genannt.

Ein fahrzeugfest zu installierendes, universelles Schnittstellenmodul 16 ist unabhängig von den verschiedenen Mobiltelefonen (nicht gezeichnet) ausgelegt. Das kommuniziert im Datenverkehr oder mit Pegelsteuerung aber geräteunabhängig über einen materiellen oder immateriellen Bus 22 und über eine ebenfalls fest im Fahrzeug montierte Montageeinheit 12 für eine gerätespezifisch ausgebildete, leicht austauschbar darauf zu befestigende Halterung 14. Diese Kommunikation erfolgt zwischen je einem Mikroprozessor beiderseits der Busverbindung , nämlich ein Mikroprozessor einerseits, im Schnittstellenmodul 16 und ein Mikroprozessor andererseits in der Halterung 14 oder in der Montageeinheit 12, über nur noch eine einzige serielle Schnittstelle, die physikalisch synchron und asynchron betrieben werden kann. Eine Halterung 14 kann über ihre Montageeinheit 12 wahlfrei mit unterschiedlichen Schnittstellenmodulen 16 und ein Schnittstellenmodul 16 kann mit beliebigen Halterungen 14 zusammenarbeiten, wofür vor Einsetzen des Datenaustausches wechselseitig eine geräteunabhängige Schnittstellenanpassung erfolgt. Das bedeutet, daß keine feste gerätetechnische Zuordnung zwischen Halterung 14 und Montageeinheiten 12 bzw. Schnittstellenmodulen 16 eingehalten werden muß, sondern der Nutzer zu seinem Mobiltelefon die Halterung 14 freizügig an die z.B. in einem Mietwagen vorzufindende Montageeinheit 12 anschließen kann.

Die mit einem Prozessor ausgestattete, gerätespezifische Halterung 14 wirkt ihrerseits nur als Steuereinheit für die gerätespezifischen Funktionen des gerade zu betreibenden Mobiltelefones, wie insbesondere Schnittstellenübergabe und Akku-Ladezyklus. Dafür ist an der im wesentlichen muldenförmigen Halterung 14 - in der Praxis Cradle genannt - ein Stecker 14a so positioniert, daß der mit den entsprechenden Anschlußstellen des spezifischen, in die Halterung 14 gerade eingesetzten Mobiltelefones zusammenwirkt. Die elektrische, insbesondere datentechnische Verbindung zwischen Halterung 14 und Montageeinheit 12 erfolgt über eine Anschlußeinheit, bei der es sich um ein Systemkabel 18 handeln kann, dessen Stecker 20 an die zugeordnete Buchse 12a in der Montageeinheit 12 gesteckt wird; oder aber statt dieser Kabel-Steckverbindung ist eine korrespondierende Steckverbindung 12b unmittelbar zwischen Montageeinheit 12 und Halterung 14 vorgesehen, die beim Aufsetzen der Halterung 14 auf die Montageeinheit 12 wirksam wird. Die in den Prozessor der Halterung 14 abgelegten gerätespezifischen Daten beziehen sich in erster Linie auf die Leistungsklasse der Mobiltelefone, weniger auf herstellerspezifische Daten, so daß eine Halterung 14 im wesentlichen nur bei Übergang auf eine andere Leistungsklasse ausgetauscht werden muß, noch nicht unbedingt beim bloßen Austausch von Mobiltelefonen (wenn nur deren Anschlüsse weiterhin zum eingebauten Stecker 14a passen).

Für einen Wechsel des Mobiltelefones ist es erforderlich, die Halterung 14 mit ihrer gerätespezifischen Software auszutauschen. Auf eine Identifikation des gerade betriebenen Mobiltelefones kann verzichtet werden, da die Steuereinheiten zwischen Halterung 14 und Schnittstellenmodul 16 seriell, also universal und deshalb geräteunabhängig zusammenwirken. Der Datenaustausch findet hier über den Bus 22 mit einem synchronen Datenkanal statt, bei dem für alle beteiligen Systeme (also insbesondere Halterung14 und Modul 16) identisch alle Zeichen in einem festen Zeitraster bzw. in einem genau aufeinander abgestimmten Takt liegen. Das Taktsignal kann auf einer gesonderten Leitung geführt oder dem Datenstrom aufmoduliert sein. Die Datenblöcke beginnen und enden mit einem Synchronisationszeichen. So können auch die stark ansteigenden Datenmengen beherrscht werden, die mit Einführung des UMTS-Netzes zu erwarten sind, aber mit herkömmlichen asynchronen Schnittstellen, also mit der derzeit anzutreffenden asynchronen Datenübertragung nicht mehr beherrschbar wären. Zusätzliche Datenmengen für die Verarbeitung von Satelliten-Navigationsinformationen, Internet-Zugänge, SMS-Verkehr und dergleichen stellen dann auch kein Problem mehr dar. Im Interesse der gerätetechnischen Flexibilität ist aber eine Umschaltmöglichkeit zwischen synchronem und asynchronem Datenaustausch vorgesehen.

Im Schnittstellenmodul 16 mit seinem Prozessor sind alle fahrzeugspezifischen Funktionen abgebildet und in Zusammenhang damit auch die optionalen Funktionen dieser Universal-Freisprecheinrichtung aktivierbar, wie insbesondere eine aus der Nachrichtentechnik geläufige Echoentzerrung, Rauschunterdrückung, Spracherkennung und -steuerung oder Text - Sprach - Wandlung. Zugleich ist dieser Prozessor als Transceiver zum Datenbus des Fahrzeuges ausgelegt.

Schließlich dient er der Freisprecheinrichtung als Audioverstärker. Ein Schnittstellenmodul 16 kann für wenigstens eine Typenklasse unterschiedlicher Fahrzeuge ausgelegt sein, um zu größeren Fertigungslosen zu gelangen.

Wenn das Mobiltelefon in seiner Halterung 14 eingerastet und dadurch mit dem Stecker 14a verbunden ist, dann wird vom Schnittstellenmodul 16 die Freisprechfunktion aktiviert und in Bereitschaftsstellung geschaltet für den Fall, daß ein Telefongespräch geführt wird. D.h. im Falle eines Telefonats wird dann insbesondere das externe Mikrofon und der externe Lautsprecher (beide in der Zeichnung nicht dargestellt und beispielsweise schon im Autoradio vorhanden) eingeschaltet und das Mute-Signal schaltet das Autoradio stumm. Wenn die Version realisiert ist, bei welcher die Schale 14 über das Systemkabel 18 mit Stecker 20 an die Montageeinheit 12 angeschlossen ist, wird mit Abnehmen der Halterung 14 (mit eingelegtem Mobiltelefon) von der Montageeinheit 12 die oben genannte Bereitschaftsstellung von Freisprechen auf einen Privatmodus umgeschaltet und im Falle, daß das Telefongespräch geführt wird, der externe Lautsprecher und das externe Mikrofon abgeschaltet und das Radio über Mute-Signal stumm geschaltet.

Um auch für diesen Betrieb im Privatmodus keine - im betriebsbereiten Kraftfahrzeug ohnehin unterdessen verbotenen - manuellen Handhabungen wie Abnehmen des Mobiltelefones aus seiner Halterung 14 ausführen zu müssen, ist die Montageeinheit 12 zweckmäßigerweise mit einer Steckfassung für einen kleinen Sender-Empfänger 25a ausgestattet, der etwa in Bluetooth-Technik eine mehrkanalige drahtlose Signalübertragung über Funk- oder Infrarotstrecken an einen entsprechenden Sender-Empfänger eines Headset 25b mit Kopfhörer und Mikrofon übermittelt.

Anstelle oder zusätzlich zu dem bei der Anordnung in Fig. 1 vorhandenen als Audiomodul ausgebildeten Sender-Empfänger 25a kann ein Personal Digital Assistant, ein sogenannter PDA oder Mini-PC, über Kabel oder kabellos, z.B. über Funk oder Blue Tooth an die Montageeinheit 12 angeschlossen werden. Vorzugsweise ist die Anschlußmöglichkeit bei Ausführungen in Fig. 1 vorgesehen, bei denen die Halterung 14 kein Anschlußkabel 18 aufweist, sondern über die elektrische Steckverbindung mit der Montageeinheit 12 verbindbar ist und die Montageeinhheit 12 entsprechende Elektronik, vorzugsweise einen Mikroprozessor aufweist. Der in Fig. 1 nicht dargestellte PDA kann mittels einer im Kraftfahrzeug stationären Halterung befestigt werden, vorzugsweise kann die Anordnung in der Nähe der Montageeinheit erfolgen. Mit dem Anschluß des PDA wird es möglich, über das Mobiltelefon empfangene SMS- oder Mailnachrichten am Display des PDA anzuzeigen oder vorzulesen. Außerdem ist es mit dem Anschluß des PDA auch möglich, einen Internetzugang im Kraftfahrzeug herzustellen, wobei der PDA die notwendige Technik bereits mitbringt, d.h. Rechenleistung, Betriebssystem und Browser usw. Mit der Möglichkeit der Internetanbindung kann auch über einen Dienstleister, z.B. Passo, der Weg navigiert werden. Darüber hinaus ist es möglich, über den PDA die. Fernsprecheinrichtung bzw. das Mobiltelefon anzusteuern, indem die Daten in den PDA eingegeben werden oder in dem PDA gespeicherte Daten verwendet werden, z.B. kann das Telefonbuch des PDA für die Nummernwahl verwendet werden.

Für den Datenverkehr erfolgt eine automatische Abstimmung zwischen der Halterung 14 und dem Schnittstellenmodul 16 aufeinander, völlig unabhängig vom gerade zu betreibenden Mobiltelefon. Vor der Schnittstellenkonfiguration herrscht die asynchrone Grundeinstellung der Busteilnehmer. Nach dem Einschalten bzw. Anstecken der Halterung 14 an den Bus 22 zum Schnittstellenmodul 16 hört die Halterung 14 in der Grundeinstellung den Bus ab. Empfängt die Halterung 14 innerhalb einer vorgegebenen Zeitspanne in der Größenordnung von z.B. drei Sekunden keine Initialisierungskennung, schaltet die Halterung 14 ihre Schnittstelle auf Pegelsteuerung um, weil offenbar kein funktionstüchtiges Schnittstellenmodul 16 oder eines mit Pegelsteuerung statt mit Prozessor-Ablaufsteuerung angeschlossen ist; d.h., es werden dann keine Datentelegramme gesendet, sondern die Schnittstellensteuerung erfolgt über analoge Signale und somit in einer Betriebsart, in der immerhin noch bestimmte Komfort-Grundfunktionen wie Stummschaltung des Autoradios bei Funkkommunikation und deren Lautstärkeregelung funktionieren. Beim Verbindungsaufbau findet also zur Beschleunigung der Initialisierung keine zusätzliche Belastung durch etwaigen Austausch systemspezifischer Daten des gerade eingesetzten Mobiltelefones statt. Der aktuelle Datenaustausch bezieht sich immer nur auf Daten, die typisch für die Halterung 14 und das Schnittstellenmodul 16 mit ihren integrierten Prozessoren sind, er enthält keine hinsichtlich des Mobiltelefons gerätetypischen Daten.

Das Modul 16 sendet zunächst zyklisch eine Initialisierungskennung für den Kommunikationsaufbau, bis bei Anschluß einer Halterung 14 über den Bus 22 eine Initialisierungsantwort von der Halterung 14 kommt. Damit kann die Schnittstellenkonfiguration über Datenaustausch stattfinden, nämlich auf optimale Geschwindigkeit und Datensicherheit zwischen Datenbus-Teilnehmern verschiedener Ausbaustufen.

Ist auf diese Weise der Verbindungsaufbau erfolgreich, sendet der Schnittstellenmodul 16 seine Schnittstellenparameter an die Halterung 14, die eine bestmögliche Schnittstellenverbindung aus Sicht des Schnittstellenmoduls16 darstellen. Das bedeutet, daß die Halterung 14 die Parameter des Schnittstellenmoduls 16 zurücksendet, wenn sie von der Halterung 14 unterstützt werden und wenn sie besser sind, als die Parameter der Halterung 14; andernfalls sendet sie ihre eigenen Parameter zurück (Maximalanforderung des Schnittstellenmoduls 16). Sollte das Schnittstellenmodul 16 die über den Bus 22 empfangenen Schnittstellenparameter nicht unterstützen können, sendet es neue Parameter an die Halterung 14, die höchstens dieselben Anforderungen haben, wie die gerade von der Halterung 14 empfangenen Parameter. Nach einer vorgegeben Anzahl von beispielsweise drei ergebnislosen Paramertervorschlägen bleibt es jedoch bei der oben erwähnten Grundeinstellung.

Die Schnittstellenkonfiguration wird ausgelöst, wenn das Schnittstellenmodul 16 ein Umschaltkommando zurücksendet, weil es den aktuell empfangenen Satz von Schnittstellenparametern unterstützen kann. Damit schalten Halterung 14 und Schnittstellenmodul 16 auf die neue Konfiguration um. Mit dieser werden dann zum Testen noch einmal die aktuell gültigen Parameter ausgetauscht. Nun kann die digitale Kommunikation zwischen Halterung 14 und Schnittstellenmodul 16 über den Bus 22 stattfinden.

Um die Nutzkommunikation zwischen Halterung 14 und Schnittstellenmodul 16 automatisch autorisieren zu können, ist eine Berechtigungsprüfung zweckmäßig, um mögliche Betriebsstörungen aufgrund von Unverträglichkeiten weitestgehend ausschließen zu können. Die Berechtigungsprüfung bezieht sich also weniger auf den Nutzer als vielmehr vor allem darauf, daß u.U. Komponenten bestimmter Auslegung nur in bestimmten Fahrzeugtypen betrieben werden dürfen. Sie folgt zweckmäßigerweise unmittelbar auf die zuvor beschriebene, erfolgreich abgeschlossene Schnittstellenkonfiguration. Nur wenn die für verschiedene Fahrzeughersteller oder Betreiber vom Lieferanten der Freisprechanlage zum jeweiligen Fahrzeugtyp vergebenen Kennungen in Form von Codenummern hinsichtlich Halterung14 und / oder Schnittstellenmodul 16 paarweise einander zugeordnet sind, kann der Datenverkehr aufgenommen werden, also die Kommunikation über diese Freisprechanlage stattfinden.

Dabei ist eine Datenkompression auf dem Bus 22 von der Montageeinheit 12 (also letztlich von der Telefon-Halterung 14) zum Schnittstellenmodul 16 zweckmäßig, um hier die erforderliche Übertragungsbandbreite und dementsprechend den Aufwand für Entstörungsmaßnahmen gering halten zu können. Für das Komprimieren wird aus Aufwandsgründen auf eines der eingeführten Standardverfahren zurückgegriffen.

Eine zusätzliche Verschlüsselung des Datenverkehrs ist ein wirksames Mittel gegen etwaige unautorisierte Eingriffe in die Schnittstellenkonfiguration. Für das Chiffrieren genügt es im vorliegenden Zusammenhang, auf die Übertragung von Zeichen im Klartext zu verzichten, indem eines der bekannten, schnellen Verschlüsselungsverfahren auf unterster Ebene unter Vermeiden einer Wiederholung gleicher Zeichenmuster verwirklicht wird. Vorzugsweise wird das erste Zeichens eines Datentelegrammes, bei dem es sich um das auch empfängerseitig bekannte Synchronisationszeichen handelt, einer Quasi-Zufallsbehandlung nach bestimmter Gesetzmäßigkeit unterworfen. Empfangsseitig wird dann das erste empfangene Zeichen in das bekannte Synchronisationszeichen rückgewandelt und die daraufhin erscheinende Datenfolge ebenfalls gemäß der dafür sich ergebenden Gesetzmäßigkeit behandelt. Der Sender chiffriert also alle Zeichen eines Telegramms nach dem gleichen für das Synchronisationszeichen vorgegebenen Muster (hinsichtlich Verschiebung und Verknüpfung seiner Bits). Der Empfänger führt das erste empfangene Zeichen auf die Bitfolge des bekannten Synchronisationszeichens zurück und wendet dann des Prozedur (hinsichtlich Verschiebung und Verknüpfung der Bits eines Zeichens) auch auf die folgenden Zeichen des Telegramms an. Durch fortlaufenden Wechsel der Kodierung haben die Telegramme selbst solcher Daten, die betriebsbedingt oder zur Redundanzerhöhung mehrfach übertragen werden, auf der Schnittstelle stets unterschiedliches Aussehen.

Da das Schnittstellenmodul 16 vorzugsweise für Einsatzmöglichkeit in unterschiedlichen Fahrzeugen ausgelegt wird, ist es zweckmäßig, darin Zusatzfunktionen zu verwirklichen, de nur bedarfsweise aktiviert werden. Eine solche Zusatzfunktion ist die Sprachsteuerung der Halterung 14 und damit des Mobiltelefons, die aber auch zur Steuerung von Fahrzeugfunktionen herangezogen werden kann. Das ist insbesondere problemlos realisierbar bei Funktionen, die ohnehin mit dem Schnittstellenmodul 16 funktional verbunden sind, wie das Autoradio, dessen Lautsprecher für die Freisprecheinrichtung genutzt wird. Dann kann aber der zu erkennende Sprachschatz auch gleich für die Akustiksteuerung etwa von am Kfz-Universalbus hängenden Komfortfunktionen wie Sitzverstellung, Fensterheber, Navigationsanzeige u.dgl. mit eingegeben werden, apparativer Mehraufwand entsteht dadurch nicht mehr.

Im Rahmen vorliegender Erfindung kann sogar auf den Einbau eines eigenständigen Schnittstellenmoduls (16) verzichtet werden, wenn dessen Funktion schon anderweitig im Kraftfahrzeug implementiert ist, wie beispielsweise in der Funktion einer Telematik-Box als Universal-Steuergerät etwa für Autoradio, Fernseher, Internetzugang und Navigationssystem, die dann auch für vorliegende Freisprecheinrichtung mitbenutzt werden kann.

Besonders zweckmäßig ist der Anschluß des Halters 14 gemäß vorliegender Erfindung an einen Kommunikationsport eines Autoradios mit universeller Eingabetastatur und Display. Denn dann kann der Halter samt seinem Mobiltelefon beispielsweise ins Handschuhfach eingeschlossen werden, weil nun - zusätzlich zum Lautsprecher und Mikrofon - für Bedienungs- und Anzeigefunktionen des Mobiltelefons das Autoradio herangezogen wird. Der Anschluß der Halterung an das Rundfunkgerät des Kraftfahrzeuges kann mit minimalem zusätzlichem Verkabelungsaufwand über eine weitere Schnittstelle erfolgen, über den auch telefonspezifische Datensätze wie Adressen und Anschlußnummern, SMS-Telegramme oder Servicedaten aus dem Fahrzeug heraus ebenso wie in es hinein übertragbar sind.

Eine ergonomisch vorteilhafte Anordnung von Bedienelementen an der für leicht demontierbare Aufnahme der Halterung 14 optimierten Montageeinheit 12 ist nicht ohne weiteres möglich. Zum Einschalten der Freisprecheinrichtung bzw, ihres Spracherkenners ist deshalb ein autarkes da batteriebetriebenes und deshalb im Fahrgastraum beliebig, auch bei den Fahrgästen auf den rückwärtigen Sitzen positionierbares kleines Steuergerät mit einigen wenigen Tasten zweckmäßig, unter denen eine Notruftaste sein kann, aber auch Bedienungsmöglichkeiten zur Steuerung von Informationsanzeigen oder etwa von Multimediaanwendungen im Kraftfahrzeug. Insbesondere kann an dem Gerät auch mindestens eine sogenannte "Push to talk" Taste vorhanden sein, über die die Sprachsteuerung der Freisprecheinrichtung und/oder anderer im Fahrzeug installierten Einrichtungen ein-/ausschaltbar ist bzw, sind. Ferner können auch Tasten zur Steuerung von reinen Fahrzeugfunktionen wie Fensterheber, Sitzverstellung usw. an dem Gerät vorgesehen sein. Die Signalübertragung zum Halter des Mobiltelefons, also somit in dessen Steuerung hinein und daraus weiter auf den Kfz-Bus, erfolgt zweckmäßigerweise drahtlos, insbesondere über eine mit gängigen Komponenten preiswert erstellbare Infrarotstrecke. Das eröffnet Möglichkeiten, die sonst nur beschränkt in der obersten Ausstattungsklasse mit Multifunktions-Lenkrad anzutreffen sind.

Weil für die Kommunikation zwischen Schnittstellenmodul 16 und Montageeinheit 12 für die Halterung 14 ein Bus 22 vorgesehen ist, können problemlos mehrere Mobiltelefone mit ihren Haltern 14 an das einzige Schnittstellenmodul 16 eines Fahrzeuges zusätzlich angeschlossen und von hier aus verwaltet werden, was die universelle Verwendbarkeit der erfindungsgemäßen Freisprecheinrichtung eindrucksvoll unterstreicht.

## Patentansprüche

1. Freisprecheinrichtung für den Betrieb von Mobiltelefonen in Kraftfahrzeugen, z.B. Personenkraftwagen, Bussen, Lastkraftwagen und anderen Nutzfahrzeugen,
mit einer Montageeinheit (12), die im Kraftfahrzeug installierbar ist,
einer Halterung (14), in der ein Mobiltelefon temporär aufnehmbar ist, die gerätespezifisch ausgebildet ist, die leicht auswechselbar auf der Montageeinheit (12) befestigt ist, und die mit vorzugsweise auf einem Mikroprozessor gespeicherten gerätespezifischen Daten versehen ist,
und einem Schnittstellenmodul (16), das im Kraftfahrzeug installierbar ist, das vorzugsweise in einem Mikroprozessor gespeicherte fahrzeugspezifische Daten enthält, und an dem die Montageeinheit (12) anschließbar ist,
**dadurch gekennzeichnet,**
**daß** das Schnittstellenmodul (16) mit einem Spracherkenner zur verbalen Steuerung der Freisprecheinrichtung und anderer Funktionen im Kraftfahrzeug ausgestattet ist,
und **daß** mehrere, jeweils einen Mikroprozessor aufweisende Halterungen (14) und/oder Montageeinheiten (12) vorgesehen sind, die an einem Bus (22) zu dem gemeinsamen Schnittstellenmodul (16) anschließbar sind.

2. Freisprecheinrichtung nach Anspruch 1,
**dadurch gekennzeichnet, daß** das im Kraftfahrzeug installierbare mit einem Spracherkenner ausgestattete Schnittstellenmodul (16) als ein eigenes Schnittstellenmodul der Freisprecheinrichtung ausgebildet ist oder als ein ohnehin im Kraftfahrzeug vorhandenes Schnittstellenmodul, vorzugsweise als Steuergerät eines Autoradios, eines Fernsehers, eines Navigationssystems, eines Internetzugangs oder eines Kommunikationssystems wie z.B. Telematic ausgebildet ist.

3. Freisprecheinrichtung nach einem der vorhergehenden Ansprüche,
**dadurch gekennzeichnet,**
**daß** an der Montageeinheit (12) ein kabelloses Fernsteuergerät anschließbar ist, über das auch derartige andere Funktionen als die Freisprecheinrichtung im Kraftfahrzeug fernsteuerbar sind, wie sie etwa über ein Multifunktionslenkrad ansteuerbar wären.

4. Freisprecheinrichtung nach einem der vorangehenden Ansprüche,
**dadurch gekennzeichnet,**
**daß** zur Verbindung des Mikroprozessors der Halterung (14) bzw. der Montageeinheit (12) mit dem Mikroprozessor des Schnittstellenmoduls (16) ein Bus vorgesehen ist, der vorzugsweise als kabellos immaterieller Bus (22) ausgebildet ist.

5. Freisprecheinrichtung nach einem der vorangehenden Ansprüche,
**dadurch gekennzeichnet,**
**daß** eine kabellose Steckverbindung (12b) zwischen Halterung (14) und Montageeinheit (12) vorgesehen ist und/oder daß eine Kabelverbindung (18) mit Stecker (20) zwischen Halterung (14) und Montageeinheit (12) vorgesehen ist oder daß keine elektrische Verbindung zwischen Halterung (14) und Montageeinheit (12), sondern eine Kabelverbindung mit Stecker zwischen Halterung (14) und dem Schnittstellenmodul (16) vorgesehen ist.

6. Freisprecheinrichtung nach einem der vorangehenden Ansprüche,
**dadurch gekennzeichnet,**
**daß** einerseits das Schnittstellenmodul (16) und andererseits die Montageeinheit (12) und/oder die Halterung (14) jeweils einen Mikroprozessor aufweisen und die Mikroprozessoren über eine serielle, wahlweise synchron und/oder asynchron betreibbare Schnittstelle über einen Bus (22) miteinander kommunizieren, um zu Betriebsbeginn die Schnittstelle gemäß der aktuellen Gerätekombination zu konfigurieren.

7. Freisprecheinrichtung nach Anspruch 7,
**dadurch gekennzeichnet,**
**daß** eine Schnittstellenkonfiguration ausgelöst wird, wenn das Schn'ittstellenmodul (16) ein Umschaltkommando an die Montageeinheit (12) zurücksendet, weil es dessen gerade empfangenen Satz von Schnittstellenparametern unterstützen kann.

8. Freisprecheinrichtung nach einem der vorangehenden Ansprüche,
**dadurch gekennzeichnet,**
**daß** einerseits das Schnittstellenmodul (16) und andererseits die Montageeinheit (12) und/oder die Halterung (14) jeweils einen Mikroprozessor aufweisen und die Mikroprozessoren über eine serielle, wahlweise synchron und/oder asynchron betreibbare Schnittstelle über einen Bus (22) miteinander kommunizieren, um eine Berechtigungsprüfung hinsichtlich der Zulässigkeit des Betriebs eines Mobiltelefons an dem vorliegenden Schnittstellenmodul (16) durchzuführen.

9. Freisprecheinrichtung nach einem der vorangehenden Ansprüche,
**dadurch gekennzeichnet,**
**daß** einerseits das Schnittstellenmodul (16) und andererseits die Montageeinheit (12) und/oder die Halterung (14) jeweils einen Mikroprozessor aufweisen und die vorzugsweise über einen Bus (22) miteinander kommunizierenden Prozessoren eine Datenverschlüsselung und/oder Datenkompression durchführen.

10. Freisprecheinrichtung nach Anspruch 9,
**dadurch gekennzeichnet,**
**daß** das erste Zeichen eines Datentelegramms ein empfängerseitig bekanntes Synchronisationszeichen ist, das senderseitig gemäß einer vorgegebenen Gesetzmäßigkeit, vorzugsweise quasizufällig durch Rotation oder durch Verknüpfung einer Bitfolge chiffriert wird, woraufhin die anderen Zeichen des zu sendenden Datentelegramms nach der gleichen Gesetzmäßigkeit chiffriert werden, während empfangsseitig das erste Zeichen entsprechend, vorzugsweise durch Bitrotation und/oder Verknüpfung, in das erwartete Synchronisationszeichen rückgewandelt wird, woraufhin auch die anderen Zeichen dieses Telegramms in gleicher Weise behandelt werden.

11. Freisprecheinrichtung nach Anspruch 10,
**dadurch gekennzeichnet,**
**daß** die Gesetzmäßigkeit für aufeinanderfolgende Datentelegramme geändert wird.

12. Freisprecheinrichtung nach einem der vorangehenden Ansprüche,
**dadurch gekennzeichnet,**
**daß** die Montageeinheit (12) und/oder die Halterung(14) mit einem Sender-Empfänger (25a) für drahtlose Audioverbindung zu einem Sender-Empfänger an einem Headset (25b) mit Kopfhörer und Mikrofon versehen ist.

13. Freisprecheinrichtung nach Anspruch 12,
**dadurch gekennzeichnet,**
**daß** der Sender-Empfänger (25a) der Montageeinheit (12) bzw. der Halterung (14) als separate und/oder nachrüstbare Baueinheit ausgebildet ist.

14. Freisprecheinrichtung nach Anspruch 12 oder 13,
**dadurch gekennzeichnet,**
**daß** die Audioverbindung so gestaltet ist, daß sie eingeschaltet ist, wenn die Freisprecheinrichtung in Privatmodus geschaltet ist und dabei automatisch Kopfhörer und Mikrofon des Headset (25b) eingeschaltet und vorzugsweise externe Lautsprecher und Mikrofone der Freisprecheinrichtung ausgeschaltet sind.

15. Freisprecheinrichtung nach einem der Ansprüche 12 bis 14,
**dadurch gekennzeichnet,**
**daß** die Audio-Verbindung über einen von Hand betätigbaren Schalter und/oder über eine Sprachsteuerung ein-/ausschaltbar ist.

16. Freisprecheinrichtung nach Anspruch 14,
**dadurch gekennzeichnet,**
**daß** der von Hand betätigbare Schalter im Bereich des Senders-Empfängers (25a) der Montageeinheit (12) bzw. der Halterung (14) und/oder im Bereich des Sender-Empfängers des Headsets (25) angeordnet ist.

17. Freisprecheinrichtung nach einem vorangehenden Ansprüche,
**dadurch gekennzeichnet,**
**daß** bei eingeschaltetem Privatmodus die Halterung (14) an oder auf der Montageeinheit (12) angeordnet ist.

18. Freisprecheinrichtung nach einem der vorangehenden Ansprüche,
**dadurch gekennzeichnet,**
**daß** an die Montageeinheit (12) und/oder die Halterung (14) und/oder an das Schnittstellenmodul (16) eine Rechen- und/oder Speicher- und/oder Anzeigeeinrichtung anschließbar ist.

19. Freisprecheinrichtung nach Anspruch 18,
**dadurch gekennzeichnet,**
**daß** die an die Montageeinheit (12) und/oder die Halterung (14) und/oder an das Schnittstellenmodul (16) anschließbare Rechen- und/oder Speicher- und/oder Anzeigeeinrichtung als Computer mit Display, vorzugsweise Laptop oder Notebook oder insbesondere als Personal Digital Assistant (PDA) oder Organizer oder Mini-Computer ausgebildet ist.

20. Freisprecheinrichtung nach Anspruch 19,
**dadurch gekennzeichnet,**
**daß** die Rechen- und/oder Speicher- und/oder Anzeigeeinrichtung über Kabel oder kabellos, z.B. über Funk, Blue Tooth anschließbar ist.

21. Freisprecheinrichtung nach einem der vorangehenden Ansprüche,
**dadurch gekennzeichnet,**
**daß** die Montageeinheit (12) eine in dem Kraftfahrzeug stationär anbringbare Konsole (12) oder dergleichen aufweist, wobei die Konsole (12) vorzugsweise am Armaturenbrett oder an der Mittelkonsole oder an der Armlehne oder in oder am Handschuhfach oder in einer Tür, vorzugsweise Innenseite einer Fahrzeugtür, anbringbar ist.

22. Freisprecheinrichtung nach Anspruch 21,
**dadurch gekennzeichnet,**
**daß** die Konsole (12) eine an die Befestigungsstelle am Armaturenbrett, an der Mittelkonsole oder an der Armlehne angepaßte Befestigungsseite aufweist.

23. Freisprecheinrichtung nach einem der vorangehenden Ansprüche,
**dadurch gekennzeichnet,**
**daß** die zur temporären Aufnahme des Mobiltelefons ausgebildete Halterung (14) mit der Konsole temporär verbindbar ist.

24. Freisprecheinrichtung nach einem der vorangehenden Ansprüche,
**dadurch gekennzeichnet,**
**daß** die Halterung (14) als in der Form vorzugsweise schalenförmig an das Mobiltelefon angepaßte Aufnahme zur temporären Aufnahme des Mobiltelefons ausgebildet ist.

25. Freisprecheinrichtung nach einem der vorangehenden Ansprüche,
**dadurch gekennzeichnet,**
**daß** die Halterung (14) einen elektrischen Anschluß für das Mobiltelefon und vorzugsweise eine Steuereinheit, insbesondere mit Mikroprozessor aufweist.

26. Kraftfahrzeug mit einer darin installierten Freisprecheinrichtung nach einem der vorangehenden Ansprüche.

## Claims

1. A hands-free device for the operation of mobile telephones in motor vehicles, e.g. automobiles, coaches, lorries and other commercial vehicles,
comprising a mounting unit (12) which can be installed in the motor vehicle,
a holder (14) in which the mobile telephone can be temporarily accommodated, which is designed as device-specific, which is fastened on the mounting unit (12) so that it is easily exchangeable and which is provided with device-specific data preferably stored on a microprocessor,
and an interface module (16) which can be installed in the motor vehicle, which preferably contains vehicle-specific data stored in a microprocessor and to which the mounting unit (12) can be connected,
**characterised in**
**that** the interface module (16) is equipped with a voice recognition device for verbal control of the hands-free device and other functions in the motor vehicle
and **that** a plurality of holders (14) and/or mounting units (12), each having a microprocessor, are provided, which can be connected on a bus (22) to the common interface module (16).

2. The hands-free device according to claim 1,
**characterised in**
**that** the interface module (16) equipped with a voice recognition device, which can be installed in the motor vehicle, is configured as a dedicated interface module of the hands-free device or is configured as an interface module otherwise present in the motor vehicle, preferably as a controller of a car radio, a television, a navigation system, an internet access or a communication system such as, for example, telematics.

3. The hands-free device according to any of the preceding claims,
**characterised in**
**that** a cableless remote control unit can be connected to the mounting unit (12), by which means such functions other than the hands-free device in the motor vehicle can be controlled remotely such as would be controllable possibly by means of a multifunction steering wheel.

4. The hands-free device according to any of the preceding claims,
**characterised in**
**that** a bus is provided for connection of the microprocessor of the holder (14) or the mounting unit (12) to the microprocessor of the interface module (16), which bus is preferably configured as a cableless virtual bus (22).

5. The hands-free device according to any of the preceding claims,
**characterised in**
**that** a cableless plug connection (12b) is provided between holder (14) and mounting unit (12) and/or a cable connection (18) with plug (20) is provided between holder (14) and mounting unit (12) or that no electrical connection is provided between holder (14) and mounting unit (12) but a cable connection with plug is provided between holder (14) and the interface module (16).

6. The hands-free device according to any of the preceding claims,
**characterised in**
**that** on the one hand the interface module (16) and on the other hand the mounting unit (12) and/or the holder (14) each have a microprocessor and the microprocessors communicate with one another via a serial, optionally synchronously and/or asynchronously operable interface by means of a bus (22) in order to configure the interface according to the current device combination at the beginning of operation.

7. The hands-free device according to claim 7,
**characterised in**
**that** an interface configuration is triggered when the interface module (16) sends a switchover command back to the mounting unit (12) because it can support the set of interface parameters thereof which has just been received.

8. The hands-free device according to any of the preceding claims,
**characterised in**
**that** on the one hand the interface module (16) and on the other hand the mounting unit (12) and/or the holder (14) each have a microprocessor and the microprocessors communicate with one another via a serial, optionally synchronously and/or asynchronously operable interface by means of a bus (22) in order to carry out an authorisation check regarding the admissibility of operation of a mobile telephone at the present interface module (16).

9. The hands-free device according to any of the preceding claims,
**characterised in**
**that** on the one hand the interface module (16) and on the other hand the mounting unit (12) and/or the holder (14) each have a microprocessor and the microprocessors communicating with one another via a bus (22) perform a data encryption and/or data compression.

10. The hands-free device according to claim 10,
**characterised in**
**that** the first character of a data telegram is a synchronisation character known on the receiver side, which is coded on the transmitter side according to a predefined law, preferably quasi-randomly by rotation or by concatenation of a bit sequence whereupon the other characters of the data telegram to be transmitted are coded according to the same law whilst on the receiver side the first character is correspondingly converted back into the expected synchronisation character preferably by bit rotation and/or concatenation whereupon the other characters of the telegram are treated in the same way.

11. The hands-free device according to claim 10,
**characterised in**
**that** the law is changed for successive data telegrams.

12. The hands-free device according to any of the preceding claims,
**characterised in**
**that** the mounting unit (12) and/or the holder (14) is provided with a transmitter-receiver (25a) for wireless audio connection to a transmitter-receiver on a headset (25b) with headphones and microphone.

13. The hands-free device according to claim 12,
**characterised in**
**that** the transmitter-receiver (25a) of the mounting unit (12) or the holder (14) is configured as a separate and/or retrofittable component.

14. The hands-free device according to claim 12 or 13,
**characterised in**
**that** the audio connection is configured such that it is switched on when the hands-free device is switched in private mode and at the same time, headphones and microphone of the headset (25b) are automatically switched on and preferably the external loudspeaker and microphones of the hands-free device are switched off.

15. The hands-free device according to any of claims 12 to 14,
**characterised in**
**that** the audio connection can be switched on/off by means of a manually actuatable switch and/or by means of a voice control.

16. The hands-free device according to claim 14,
**characterised in**
**that** the manually actuatable switch is arranged in the area of the transmitter-receiver (25a) of the mounting unit (12) or the holder (14) and/or in the area of the transmitter-receiver of the headset (25).

17. The hands-free device according to any of the preceding claims,
**characterised in**
**that** when private mode is switched on, the holder (14) is arranged at or on the mounting unit (12).

18. The hands-free device according to any of the preceding claims,
**characterised in**
**that** a processing and/or memory and/or display device can be connected to the mounting unit (12) and/or the holder (14) and/or the interface module (16).

19. The hands-free device according to claim 18,
**characterised in**
**that** the processing and/or memory and/or display device connectable to the mounting unit (12) and/or the holder (14) and/or the interface module (16) is configured as a computer with display, preferably a laptop or notebook or in particular as a personal digital assistant (PDA) or organizer or minicomputer.

20. The hands-free device according to claim 19,
**characterised in**
**that** the processing and/or memory and/or display device can be connected via cable or in a cableless manner e.g. via radio, bluetooth.

21. The hands-free device according to any of the preceding claims,
**characterised in**
**that** the mounting unit (12) comprises a console (12) or the like which can be attached fixedly in the motor vehicle, wherein the console (12) can preferably be attached to the dashboard or to the central console or to the armrest or in or on the glove compartment or in a door, preferably an inner side of a vehicle door.

22. The hands-free device according to claim 21,
**characterised in**
**that** the console (12) has a fastening side adapted to the fastening point on the dashboard, on the central console or on the armrest.

23. The hands-free device according to any of the preceding claims,
**characterised in**
**that** the holder (14) configured for temporary accommodation of the mobile telephone can be temporarily connected to the console.

24. The hands-free device according to any of the preceding claims,
**characterised in**
**that** the holder (14) is configured as a receptacle for temporary accommodation of the mobile telephone, which is matched in shape to the mobile telephone, preferably being dish-shaped.

25. The hands-free device according to any of the preceding claims,
**characterised in**
**that** the holder (14) has an electrical connection for the mobile telephone and preferably a control unit, in particular with microprocessor.

26. A motor vehicle with hands-free device according to any of the preceding claims installed therein.

## Revendications

1. Kit mains libres permettant le fonctionnement de téléphones mobiles dans des véhicules automobiles, par exemple des véhicules personnels, des bus, des camions et d'autres véhicules utilitaires,
comportant une unité de montage (12), qui peut être installée dans le véhicule,
un support (14), sur lequel un téléphone mobile peut être temporairement déposé, qui a une configuration spécifique à l'appareil, qui est fixé de manière facilement remplaçable sur l'unité de montage (12) et qui est de préférence pourvu de données spécifiques à l'appareil mémorisées dans un microprocesseur,
et un module d'interface (16), qui peut être installé dans le véhicule, qui contient de préférence des données spécifiques à un véhicule mémorisées dans un microprocesseur et peut être raccordé à l'unité de montage (12),
**caractérisé en ce que**
le module d'interface (16) est équipé d'un dispositif de reconnaissance vocale pour commander vocalement le kit mains libres et d'autres fonctions dans le véhicule,
et **en ce que** plusieurs consoles (14) et/ou unités de montage (12) présentant respectivement un microprocesseur sont prévues, lesquelles peuvent être raccordées à un bus (22) afin de former le module d'interface (16) commun.

2. Kit mains libres selon la revendication 1,
**caractérisé en ce que**
le module d'interface (16) équipé d'un dispositif de reconnaissance vocale pouvant être installé dans le véhicule est configuré comme un module d'interface propre du kit mains libres ou comme un module d'interface présent de toute façon dans le véhicule, de préférence comme un appareil de commande d'un autoradio, d'une télévision, d'un système de navigation, d'un accès Internet ou d'un système de communication comme par ex. la télématique.

3. Kit mains libres selon une des revendications précédentes,
**caractérisé en ce que** un appareil de commande à distance peut être raccordé à l'unité de montage (12), via lequel d'autres types de fonctions que le kit mains libres dans le véhicule peuvent être commandés à distance, comme si ils pouvaient être commandés via un volant multifonctions.

4. Kit mains libres selon une des revendications
précédentes,
**caractérisé en ce que**
pour relier le microprocesseur du support (14), respectivement de l'unité de montage (12) au microprocesseur du module d'interface (16), un bus est prévu, lequel est de préférence configuré comme un bus immatériel sans fil (22).

5. Kit mains libres selon une des revendications précédentes,
**caractérisé en ce que**
une liaison enfichable sans fil (12b) est prévue entre le support (14) et l'unité de montage (12) et/ou **en ce que** une liaison câblée (18) avec un connecteur mâle (20) entre le support (14) et l'unité de montage (12) est prévue ou **en ce que** aucune liaison électrique n'est prévue entre le support (14) et l'unité de montage (12) mais plutôt une liaison câblée avec un connecteur mâle entre le support (14) et le module d'interface (16).

6. Kit mains libres selon une des revendications
précédentes,
**caractérisé en ce que**
d'un côté le module d'interface (16) et de l'autre côté l'unité de montage (12) et/ou le support (14) présentent respectivement un microprocesseur et les microprocesseurs communiquent les uns avec les autres via un bus (22) par l'intermédiaire d'une interface sérielle, fonctionnant au choix de manière synchrone et/ou asynchrone, afin de configurer au début du fonctionnement l'interface conformément à une combinaison d'appareils actuelle.

7. Kit mains libres selon la revendication 7,
**caractérisé en ce que**
une configuration d'interface est résolue, lorsque le module d'interface (16) renvoie une commande de commutation à l'unité de montage (12), parce qu'il peut assister un jeu déjà reçu de paramètres d'interface de celle-ci.

8. Kit mains libres selon une des revendications
précédentes,
**caractérisé en ce que**
d'un côté le module d'interface (16) et d'un autre côté l'unité de montage (12) et/ou le support (14) présentent respectivement un microprocesseur et les microprocesseurs communiquent les uns avec les autres via un bus (22) par l'intermédiaire d'une interface sérielle, fonctionnant au choix de manière synchrone et/ou asynchrone, afin d'effecteur un contrôle d'autorisation en ce qui concerne l'autorisation qu'a un téléphone mobile de fonctionner sur le présent module d'interface (16).

9. Kit mains libres selon une des revendications
précédentes,
**caractérisé en ce que**
d'un côté le module d'interface (16) et d'un autre côté l'unité de montage (12) et/ou le support (14) présentent respectivement un microprocesseur et les processeurs communiquant les unes avec les autres de préférence par l'intermédiaire d'un bus (22) exécutent un cryptage de données et/ou une compression de données.

10. Kit mains libres selon la revendication 9,
**caractérisé en ce que**
le premier signe d'un télégramme de données est un signe de synchronisation connu du côté du récepteur, qui est chiffré du côté de l'émetteur conformément à une légitimité prescrite, de préférence de manière quasi aléatoire par rotation ou par entrelacement d'une séquence binaire, après quoi les autres signes du télégramme de données à envoyer sont chiffrés selon la même légitimité, pendant que du côté du récepteur le premier chiffre est reconverti de manière correspondante, de préférence par rotation de bits et/ou par entrelacement de bits, en le signe de synchronisation attendu, après quoi les autres signes de ce télégramme sont aussi traités de la même manière.

11. Kit mains libres selon la revendication 10,
**caractérisé en ce que**
la légitimité des télégrammes de données successifs est modifiée.

12. Kit mains libres selon une des revendications
précédentes,
**caractérisé en ce que**
l'unité de montage (12) et/ou le support (14) est pourvu d'un émetteur/récepteur (25a) pour une liaison audio sans fil vers un émetteur/récepteur sur un casque (25b) avec écouteurs et microphone.

13. Kit mains libres selon la revendication 12,
**caractérisé en ce que**
l'émetteur/récepteur (25a) de l'unité demontage (12), respectivement du support (14) est configuré comme un composant séparé et/ou pouvant être rajouté ultérieurement.

14. Kit mains libres selon la revendication 12 ou 13,
**caractérisé en ce que**
la liaison audio est conçue de telle sorte qu'elle soit activée, lorsque le kit mains libres est enclenché en mode privé et que les écouteurs et le microphone du casque (25b) sont donc branchés automatiquement et de préférence un haut-parleur externe et les microphones du kit mains libres sont débranchés.

15. Kit mains libres selon une des revendications 12 à 14,
**caractérisé en ce que**
la liaison audio peut être branchée/débranchée par l'intermédiaire d'un interrupteur actionné à la main et/ou d'une commande vocale.

16. Kit mains libres selon la revendication 14,
**caractérisé en ce que**
l'interrupteur actionné à la main est disposé au niveau de l'émetteur/récepteur (25a) de l'unité de montage (12), respectivement du support (14) et/ou au niveau de l'émetteur/récepteur du casque (25).

17. Kit mains libres selon une des revendications
précédentes,
**caractérisé en ce que**
lorsque le mode privé est enclenché, le support (14) est disposée sur ou à côté de l'unité de montage (12).

18. Kit mains lires selon une des revendications
précédentes,
**caractérisé en ce que**
un dispositif de calcul et/ou de mémorisation et/ou d'affichage peut être raccordé à l'unité de montage (12) et/ou au support (14) et/ou au module d'interface (16).

19. Kit mains libres selon la revendication 18,
**caractérisé en ce que**
le dispositif de calcul et/ou de mémorisation et/ou d'affichage pouvant être raccordé à l'unité de montage (12) et/ou au support (14) et/ou au module d'interface (16) est configuré comme un ordinateur avec un écran, de préférence un ordinateur portable ou un agenda électronique ou notamment un assistant numérique personnel (PDA) ou un organisateur ou un mini-ordinateur.

20. Kit mains libres selon la revendication 19,
**caractérisé en ce que**
le dispositif de calcul et/ou de mémorisation et/ou d'affichage peut être raccordé de manière câblée ou sans fil, par ex. par radio, Blue Tooth.

21. Kit mains libres selon une des revendications
précédentes,
**caractérisé en ce que**
l'unité de montage (12) présente une console (12) ou similaire pouvant être montée de manière fixe dans le véhicule, moyennant quoi la console (12) peut être montée de préférence sur le tableau de bord ou sur la console centrale ou sur les accoudoirs ou dans ou sur la boîte à gants ou dans une porte, de préférence du côté intérieur d'une porte de véhicule.

22. Kit mains libres selon la revendication 21,
**caractérisé en ce que**
la console (12) présente un côté de fixation adapté au tableau de bord, à la console centrale ou aux accoudoirs.

23. Kit mains libres selon une des revendications
précédentes,
**caractérisé en ce que**
le support (14) conçu afin de recevoir temporairement le téléphone mobile peut être relié temporairement à la console.

24. Kit mains libres selon une des revendications
précédentes,
**caractérisé en ce que**
le support (14) est configuré comme un réceptacle adapté au téléphone mobile de préférence en forme de coque, pour recevoir temporairement le téléphone mobile.

25. Kit mains libres selon une des revendications précédentes,
**caractérisé en ce que**
le support (14) présente un raccord électrique pour le téléphone mobile et de préférence une unité de commande, de préférence avec microprocesseur.

26. Véhicule automobile avec kit mains libres pouvant être installé dans celui-ci selon une des revendications précédentes.
